Europäisches Patentamt

European Patent Office

Office européen des brevets

(11) Veröffentlichungsnummer: **0 340 468**
A2

## (12) EUROPÄISCHE PATENTANMELDUNG

(21) Anmeldenummer: 89106033.7

(51) Int. Cl.⁴: **B65G 47/82**

(22) Anmeldetag: 06.04.89

(30) Priorität: 04.05.88 DE 3815075

(43) Veröffentlichungstag der Anmeldung:
08.11.89 Patentblatt 89/45

(84) Benannte Vertragsstaaten:
CH DE FR GB IT LI

(71) Anmelder: ROBERT BOSCH GMBH
Postfach 10 60 50
D-7000 Stuttgart 10(DE)

(72) Erfinder: Fassnacht, Herbert
Ölbergstr. 5
D-7180 Crailsheim(DE)

(54) Vorrichtung zum Überführen von Gegenständen.

(57) Eine Vorrichtung zum Überführen von hintereinander kontinuierlich herangeführten Gegenständen (1) zu einer die Gegenstände in Gruppen taktweise wegführenden Fördereinrichtung hat eine Förderschnecke (24) und ein schrittweise geschaltetes Fächerband (11). Zum taktweisen Überführen jeweils einer Gruppe von Gegenständen (1) hat die Vorrichtung zwischen der Förderschnecke (24) und dem Übernahmebereich des Förderbandes einen hin- und herbewegten, als Trennorgan wirkenden Schieber (21), der den unterhalb des Auslaufbereichs der Förderschnecke angeordneten Übernahmebereich des Fächerbandes beim Vorschieben abdeckt und beim Zurückziehen freigibt, so daß mitgeführte Gegenstände in die Fächer (12) während des Stillstands des Fächerbandes fallen. Der Schieber wird von einem programmgesteuerten Stellantrieb (26, 30, 33) hin- und herbewegt.

FIG. 2

## Vorrichtung zum Überführen von Gegenständen

Stand der Technik

Die Erfindung geht aus von einer Überführvorrichtung nach dem Oberbegriff des Anspruchs 1. Bei einer beispielsweise durch die DE-B-2 605 775 bekannt gewordenen Vorrichtung dieser Art übergibt die Förderschnecke an ihrem Auslaßende nacheinander herangeführte Ampullen in Mulden eines von mehreren an der Übergabestelle kontinuierlich vorbeibewegten segmentartigen Transportorganen, das nach dem Beladen durch eine schnelle Bewegung in den Übernahmebereich eines taktweise hin- und herbewegten Transportrechens verschwenkt, dort kurzzeitig zum Übergeben der Ampullen stillgesetzt und darauf wieder weitergedreht wird. Während das geleerte Transportorgan sich weiterbewegt und ein anderes beladenes Transportorgan in den Übernahmebereich einschwenkt, führt der Transportrechen die übernommenen Ampullen ab und kehrt dann wieder in die Übernahmestellung zurück. Die bekannte Überführvorrichtung ist, bedingt durch die Anzahl der Mulden eines Transportorgans, jeweils nur zum Überführen einer Gruppe mit einer bestimmten Anzahl von Ampullen einsetzbar.

Vorteile der Erfindung

Die erfindungsgemäße Überführvorrichtung mit den kennzeichnenden Merkmalen des Anspruchs 1 hat demgegenüber den Vorteil, daß durch Verändern des Hubs des Trennorgans und durch entsprechendes Anpassen der Schaltperiode der Fördereinrichtung die Anzahl von Gegenständen einer jeweils übergebenen Gruppe in einfacher Weise variiert werden kann.

Durch die in den Unteransprüchen aufgeführten Maßnahmen sind vorteilhafte Weiterbildungen und Verbesserungen der im Anspruch 1 angegebenen Überführvorrichtung möglich. Besonders eignet sich die Anordnung eines programmierbaren Stellantriebs zum Verschieben des Trennorgans, so daß sich der Hub desselben in einfacher Weise einstellen läßt.

Zeichnung

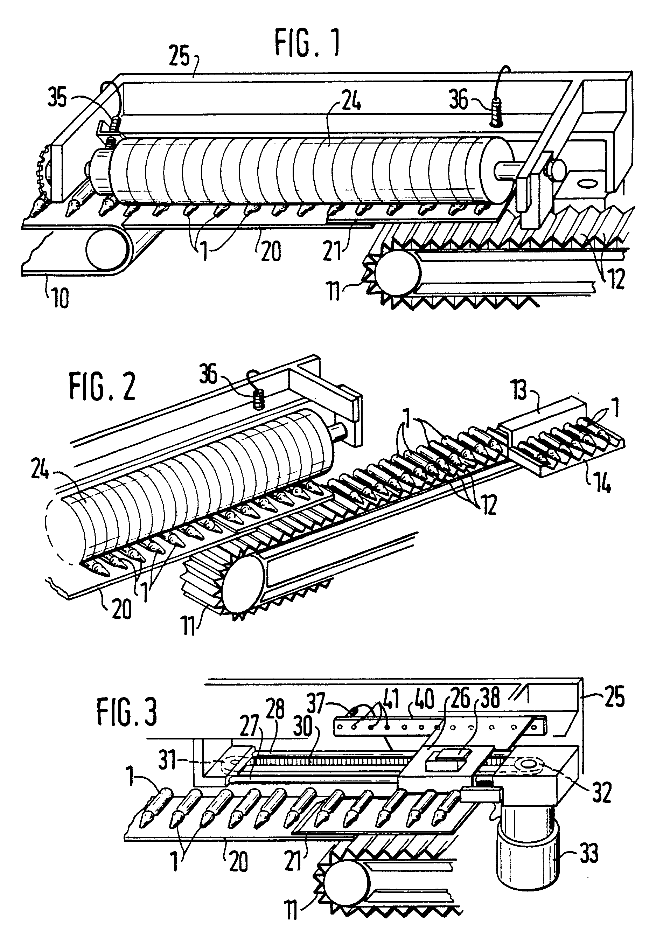

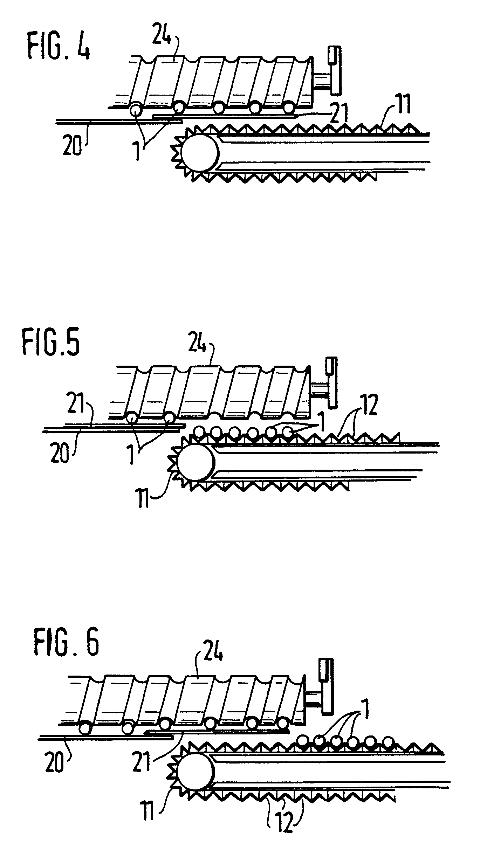

Ein Ausführungsbeispiel der Erfindung ist in der Zeichnung dargestellt und wird im folgenden näher erläutert. Es zeigen Figur 1 eine Überführvorrichtung in schaubildlicher Ansicht, Figur 2 den Auslaufbereich der Überführvorrichtung nach Figur 1 in schaubildlicher Ansicht, Figur 3 die Überführvorrichtung nach Figur 1 unter Weglassung der Förderschnecke in schaubildlicher Ansicht und die Figuren 4 bis 6 die Überführvorrichtung nach den Figuren 1 und 2 in verschiedenen Arbeitsstellungen vereinfacht in Seitenansicht.

Beschreibung des Ausführungsbeispiels

Der dargestellten Überführvorrichtung werden Behälter 1, wie Fläschchen, Ampullen, Vials oder dergleichen, die aus einer Etikettier- oder Füllmaschine kommen, auf einem in waagrechter Ebene verlaufenden Förderband 10 in liegender Stellung kontinuierlich zugeführt. Die übernommenen Behälter 1 übergibt die Überführvorrichtung an eine schrittweise bewegte Fördereinrichtung, beispielsweise ein endloses Fächerband 11, das bei jedem Förderschritt eine Gruppe von Gegenständen 1, beispielsweise je sechs Behälter 1, zu einer Verpackungsmaschine bringt, von der in Figur 2 eine Aufnahmestation 14 dagestellt ist.

An die waagrechte Förderstrecke des endlosen und mit konstanter Geschwindigkeit laufenden Förderbandes 10 schließt sich in gleicher Ebene ein ortsfester Tisch 20 an. In gleicher Richtung, jedoch in einer etwas tiefer gelegten waagrechten Ebene schließt sich die Förderstrecke des Fächerbandes 11 an. Mit geringem Spiel ist oberhalb des Tisches 20 und des nahegelegenen Übernahmebereichs des Fächerbandes 11 ein Schieber 21 hin- und herbewegbar angeordnet. In der vorgeschobenen Endstellung überbrückt der Schieber 21 den Übernahmebereich des Fächerbandes 11 und in der anderen zurückgezogenen Stellung gibt er diesen Bereich, den Tisch 20 deckend frei.

Oberhalb des Tisches 20 und des Übernahmebereichs des Fächerbandes 11 erstreckt sich eine Förderschnecke 24 mit einem Fördergang, deren Enden in einem Gestell 25 drehbar gelagert sind. Die Förderschnecke 24 wird mit gleichförmiger Umfangsgeschwindigkeit angetrieben, so daß ihr Schneckengang am Eingangsende des Tisches 20 die vom Förderband 10 angelieferten Behälter 1 nacheinander erfaßt und in Richtung zum Fächerband 11 hin fördert, wobei die Behälter 1 auf dem Tisch 20 und auf dem Schieber 21 gleiten oder abrollen. Während des kontinuierlichen Vorbewegens der Behälter 1 wird bei jedem Arbeitstakt der Schieber 21 zunächst in Förderrichtung der Behälter 1 verschoben, wobei die vorauseilenden Behälter 1 von dem Schieber 21 getragen über den Übernahmebereich des Fächerbandes 11 gelangen (Figur 4). Während die Förderschnecke 24 weiterfördert und das Fächerband 11 stillsteht, wird dar-

2

auf der Schieber 21 entgegen der Förderrichtung der Behälter 1 zurückgezogen, wobei die auf dem Schieber 1 liegenden und während des Zurückziehens des Schiebers 21, noch auf diesen verbrachte Behälter 1 nach unten in die bereitstehenden Fächer 12 des Fächerbandes 11 fallen (Figur 5). Gleichzeitig gelangen bereits vom Schneckengang der Förderschnecke 24 erfaßte und auf dem Tisch 20 liegende Behälter 1 auf den Schieber 21. Nach Erreichen seiner zurückgezogenen Endstellung wird der Schieber 21 wieder in Förderrichtung der Behälter 1 vorgeschoben, wobei er die vom Schneckengang erfaßten und beabstandeten Behälter 1 trägt. Gleichzeitig wird das Fächerband 11 um einen Förderschritt weitergeschaltet, dessen Länge der Gesamtbreite der zuvor mit Behältern 1 belegten Fächer 12 entspricht (Figur 6). Dieses Arbeitsspiel wiederholt sich, so daß jeweils eine Gruppe von Behältern 1, beispielsweise sechs, von dem Fächerband 11 weggeführt und in eine Station mit einem Querschieber 13 gebracht werden, der jeweils während des Stillstands des Fächerbandes 11 eine Gruppe von Gegenständen 1 in die Aufnahmestation 14 einer Verpackungsmaschine überschiebt.

Zum Hin- und Herbewegen des wie ein Trennorgan wirkenden Schiebers 21 ist dieser an einem Schlitten 26 befestigt, der auf zwei zur Achse der Förderschnecke 24 parallelen Stangen 27, 28 im Gestell 25 verschiebbar ist. Zum Hin- und Herbewegen des Schlittens 26 ist dieser an einem Trum eines endlosen, über zwei Umlenkräder 31, 32 geführten Zahnriemens 30 angelenkt, der über das Umlenkrad 32 von einem Schrittmotor 33 vor- und zurückbewegt wird. Zum Steuern der Bewegung des Schiebers 21 sind mehrere, beispielsweise optische Sensoren 35, 36, 37 vorgesehen. Der erste Sensor 35 ist der Förderschnecke 24 zugeordnet und tastet deren Drehbewegung bzw. Drehwinkel. Der zweite Sensor 36, der mit einer Fahne 38 auf dem Schlitten 26 zusammenwirkt, tastet jeweils die vorgeschobene Endlage des Schiebers 21. Schließlich wirkt der Sensor 37 mit einer am Schlitten 21 befestigten Leiste 40 zusammen, die entsprechend der Teilung der Fächer 12 des Fächerbandes 11 mehrere Löcher 41 hat, so daß beim Vorbeibewegen der Lochleiste 40 am Taster 37 die Anzahl der abgelegten Behälter 1 getastet wird. Die von den Sensoren 35, 36, 37 erzeugten Signale werden einem programmierbaren Mikroprozessor zugeführt, der entsprechend der eingegebenen Daten den Schrittmotor 33 und den Motor für das Fächerband 11 ansteuert. Dadurch ist es möglich, in einfacher Weise die Überführvorrichtung zum Abteilen und Überführen von Gegenstandsgruppen mit einer Anzahl von beispielsweise zwei bis zwölf Behältern einzustellen. Diese Einstellung erfolgt durch Einstellen des Hubs des Schiebers 21 und des Startbeginns der Fächerkette 11, wenn der Schieber 21 die angesteuerte zurückgezogene Endlage erreicht.

Das dargestellte und beschriebene Ausführungsbeispiel ist zum Überführen von liegend zugeführten Behältern 1 ausgebildet. Die Überführvorrichtung läßt sich auch zum Überführen von stehend zugeführten Behältern anpassen. Dazu ist dem Übergabeende des Schiebers 21 eine Weiche zuzuordnen, die jeweils dem das Auslaßende des Schiebers verlassenden Behälter 1 eine Querbewegung erteilt.

## Ansprüche

1. Vorrichtung zum Überführen von von einer Förderschnecke (24) kontinuierlich in einer Reihe herangeführten Gegenständen (1) zu einer die Gegenstände in Gruppen taktweise wegführenden Fördereinrichtung (11), dadurch gekennzeichnet, daß die Förderschnecke (24) und die Fördereinrichtung (11) sich über eine bestimmte Strecke deckend nebeneinander verlaufen und daß auf dieser Strecke ein als Trennorgan wirkender Schieber (21) zwischen der Förderschnecke (24) und der Fördereinrichtungg (11) hin- und herbewegbar angeordnet ist, der während der Förderphase der Fördereinrichtung in Förderrichtung der Förderschnecke (24) eine Sperre bildet und in der Ruhephase der Fördereinrichtung in entgegengesetzter Richtung die Sperre wieder abbaut.

2. Vorrichtung nach Anspruch 1, dadurch gekennzeichnet, daß der Schieber (21) mit einem programmierbaren Stellantrieb (26, 30, 33) verbunden ist.

3. Vorrichtung nach Anspruch 2, dadurch gekennzeichnet, daß der Stellantrieb aus einer von einem Schrittmotor (33) angetriebenen Lineareinheit (26, 30) besteht.

4. Vorrichtung nach einem der Ansprüche 1 bis 3, dadurch gekennzeichnet, daß der Schieber (21) in waagrechter Ebene unterhalb der Förderschnecke (24) und oberhalb des Übernahmebereichs der Fördereinrichtung (11) angeordnet ist.

5. Vorrichtung nach einem der Ansprüche 1 bis 3, dadurch gekennzeichnet, daß am Auslaufende des Schiebers (21) eine Weiche angeordnet ist, die jeweils dem den Schieber verlassenden Gegenstand (1) eine Querbewegung erteilt.

FIG. 1

FIG. 2

FIG. 3

FIG. 4

FIG.5

FIG. 6